# EUROPEAN PATENT APPLICATION

(11) **EP 4 783 248 A1**
(43) Date of publication of application: **29.07.2026**
(21) Application number: 25869608.7
(22) Date of filing: 04.11.2025
(51) Int. Cl.: H01M 4/13, H01M 4/62, H01M 10/42, H01M 4/36, H01M 10/052, H01M 4/139, H01M 4/04, H01M 4/587, H01M 4/38, H01M 4/02

(54) **NEGATIVE ELECTRODE FOR LITHIUM SECONDARY BATTERY, LITHIUM SECONDARY BATTERY COMPRISING SAME, AND METHOD FOR MANUFACTURING NEGATIVE ELECTRODE FOR LITHIUM SECONDARY BATTERY**

(30) Priority: 04.11.2024 KR 20240154421
(71) Applicant: LG ENERGY SOLUTION, LTD., Seoul 07335 (KR)
(72) Inventor: LEE, Sang Hyun, Daejeon 34122 (KR); HYUN, Jaeik, Daejeon 34122 (KR); KIM, Donghyuk, Daejeon 34122 (KR); LEE, Yong Ju, Daejeon 34122 (KR)
(74) Representative: Plasseraud IP
(86) International application number: PCT/KR2025/017863
(87) International publication number: WO 2026/095737

(57) **Abstract**

The present invention relates to a negative electrode for a lithium secondary battery including: a negative electrode active material layer provided on at least one surface of a negative electrode current collector layer; a surface layer provided on a surface of the negative electrode active material layer; and an inner layer provided between the negative electrode active material layer and the surface layer, wherein the surface layer and the inner layer include one or more selected from the group consisting of a polyvinyl-based polymer, a polyamide-based polymer, a polysilane-based polymer, a polyfluorene-based polymer, a polyaniline-based polymer, and a combination thereof, and the inner layer and the surface layer include polymers different from each other, thereby suppressing thermal runaway.

## Description

### [Technical Field]

This application claims priority to and the benefit of Korean Patent Application No. 10-2024-0154421 filed in the Korean Intellectual Property Office on November 4, 2024, the entire contents of which are incorporated herein by reference.

The present invention relates to a negative electrode for a lithium secondary battery, a lithium secondary battery including the same, and a method for manufacturing a negative electrode for a lithium secondary battery.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, a separator interposed between the positive electrode and the negative electrode, an electrolyte, and the like. In addition, an electrode such as a positive electrode and a negative electrode may include an electrode active material layer provided on a current collector layer.

Note that thermal runaway reactions, which occur due to various causes, such as defects in lithium secondary batteries, external shocks, overcharging, and overdischarging, are problematic because they cause positive feedback that generates more heat, such as battery swelling, voltage increase, and electrolyte solution temperature increase, leading to fire or explosion accidents. Accordingly, various studies are being conducted to suppress the thermal runaway reactions in lithium secondary batteries.

### [Detailed Description of the Invention]

### [Technical Problem]

The present invention has been made in an effort to provide a negative electrode for a lithium secondary battery capable of suppressing thermal runaway, a lithium secondary battery including the same, and a method for manufacturing a negative electrode for a lithium secondary battery.

### [Technical Solution]

An exemplary embodiment of the present specification provides a negative electrode for a lithium secondary battery including:
a negative electrode active material layer provided on at least one surface of a negative electrode current collector layer;
a surface layer provided on a surface of the negative electrode active material layer; and
an inner layer provided between the negative electrode active material layer and the surface layer,
wherein the surface layer and the inner layer include one or more selected from the group consisting of a polyvinyl-based polymer, a polyamide-based polymer, a polysilane-based polymer, a polyfluorene-based polymer, a polyaniline-based polymer, and a combination thereof, and the inner layer and the surface layer include polymers different from each other.

An exemplary embodiment of the present specification provides a lithium secondary battery including:
a positive electrode for a lithium secondary battery;
the negative electrode for a lithium secondary battery described above;
a separator; and
an electrolyte solution.

An exemplary embodiment of the present specification provides a battery module or a battery pack including the above-described lithium secondary battery.

Another exemplary embodiment of the present specification provides a battery pack including the above-described battery module.

Finally, an exemplary embodiment of the present specification provides a method for manufacturing a negative electrode for a lithium secondary battery, the method including:
(S1) forming a first negative electrode active material layer by coating a negative electrode active material layer composition on at least one surface of a negative electrode current collector layer;
(S2) forming an inner layer on the first negative electrode active material layer;
(S3) forming a second negative electrode active material layer by coating the negative electrode active material layer composition on the inner layer; and
(S4) forming a surface layer on the second negative electrode active material layer,
wherein S2 and S3 are repeated from one to five times.

### [Advantageous Effects]

The negative electrode for a lithium secondary battery according to an exemplary embodiment described in the present specification includes two or more polymer thin film layers, thereby acting as a barrier against the oxidation reaction between oxygen and lithium ions released from the negative electrode active material, and thus suppressing a thermal runaway reaction due to oxidation heat and suppressing a swelling phenomenon to improve life performance.

The method for manufacturing a negative electrode for a lithium secondary battery according to an exemplary embodiment described in the present specification integrates the coating step for providing a negative electrode active material layer and the deposition step for providing a polymer thin film layer into a roll-to-roll process, thereby facilitating formation of a protective layer on the surface and inside of the negative electrode during the manufacture of the negative electrode, and thus ensuring processability.

### [Brief Description of Drawings]

FIGS. 1 to 3 are diagrams illustrating a stacked structure of a negative electrode for a lithium secondary battery according to an exemplary embodiment of the present invention.
FIG. 4 is a flowchart showing a method for manufacturing a negative electrode for a lithium secondary battery according to an exemplary embodiment of the present invention.
FIG. 5 is a diagram illustrating a stacked structure of a lithium secondary battery according to an exemplary embodiment of the present invention.

### [Explanation of Reference Numerals and Symbols]

10: negative electrode current collector layer
20: negative electrode active material layer (first or second negative electrode active material layer)
30: separator
40: positive electrode active material layer
50: positive electrode current collector layer
100: negative electrode for lithium secondary battery
200: positive electrode for lithium secondary battery
300: inner layer
400: surface layer

### [Best Mode]

Before describing the present invention, some terms are first defined.

As used herein, when it is described that one part "includes", "comprises" or "has" one constituent element, unless otherwise specifically described, this does not mean that another constituent element is excluded, but means that another constituent element may be further included.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

In the present specification, when a part of a layer or the like is referred to as being "above" or "on" another part, it may be directly on the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

In the present specification, when one member is referred to as being provided on "both surfaces" of another member, this means that one member is provided on one surface of another member, and one member is also provided on another surface corresponding to the one surface. In addition, this includes not only a case where one member is in contact with another member, but also a case where still another member is present between the two members.

In the present specification, 'p to q' means a range of 'p or more and q or less'.

In the present specification, the terms such as "~unit" and "device" refer to units for processing at least one function or operation.

In the present specification, "Dn" refers to a particle size distribution, and refers to a particle diameter (average particle diameter) at the n% point in the cumulative distribution of the number of particles according to the particle diameter. That is, D₅₀ is the particle diameter at the 50% point of the cumulative distribution of the number of particles according to the particle diameter, D₉₀ is the particle diameter at the 90% point of the cumulative distribution of the number of particles according to the particle diameter, and D₁₀ is the particle diameter at the 10% point of the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present specification, the particle size or particle diameter may refer to the average diameter or representative diameter of each grain forming a metal powder or inorganic particle.

As used herein, the singular forms of terms, such as "a" and "an", are intended to include the plural forms as well, unless the context clearly indicates otherwise.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

Hereinafter, preferred exemplary embodiments of the present invention will be described in detail. However, it should be understood that the exemplary embodiments of the present invention may be modified in various forms and the scope of the present invention is not limited to the exemplary embodiments described below.

A negative electrode for a lithium secondary battery according to an exemplary embodiment of the present specification includes a negative electrode active material layer provided on at least one surface of a negative electrode current collector layer; a surface layer provided on a surface of the negative electrode active material layer; and an inner layer provided between the negative electrode active material layer and the surface layer,
wherein the surface layer and the inner layer include one or more selected from the group consisting of a polyvinyl-based polymer, a polyamide-based polymer, a polysilane-based polymer, a polyfluorene-based polymer, a polyaniline-based polymer, and a combination thereof, and the inner layer and the surface layer include polymers different from each other.

The main cause of heat generation in the thermal runaway reaction of the negative electrode is the oxidation heat generated when lithium ions released from the negative electrode active material undergo an oxidation reaction with oxygen. Therefore, the present inventors have proposed the present invention to prevent direct contact between the negative electrode active material and oxygen on the negative electrode surface in order to improve the thermal stability of the negative electrode, and to suppress diffusion of lithium ions inside the negative electrode to the surface to such an extent as to prevent contact between lithium ions and oxygen during thermal runaway.

In order to solve the above problems, the present invention is characterized in that it can suppress an initial thermal runaway reaction by preventing, through a surface layer provided on the surface of the negative electrode active material layer, lithium ions released from the negative electrode active material from undergoing an oxidation reaction with oxygen around the negative electrode, and can suppress, through one or more inner layers provided inside the negative electrode active material layer, thermal runaway from reaching the inside of the negative electrode when the temperature continues to rise due to thermal runaway that occurs despite the surface layer. That is, the present invention can suppress thermal runaway by including two or more thin film layers in total.

In addition, the surface layer and the inner layer have an advantage in that, by including polymer-based materials, optimization of thermal runaway prevention performance through adjustment of the thickness of each layer is facilitated compared to when the layers are composed of inorganic materials such as metal or ceramic.

In the negative electrode for a lithium secondary battery according to an exemplary embodiment of the present specification, the presence or absence of the surface layer and the inner layer can be identified through cross-sectional image analysis, and the types of polymers formed in each thin film layer can be identified through FTIR (Fourier-Transform Infrared Spectroscopy) and NMR (Nuclear Magnetic Resonance) analysis.

In an exemplary embodiment of the present specification, the surface layer may be provided on a surface of the negative electrode active material layer, and the surface layer and the surface of the negative electrode active material layer may be or may not be in direct contact with each other. Specifically, the negative electrode for a lithium secondary battery according to an exemplary embodiment of the present specification may include the surface layer, the negative electrode active material layer, and the negative electrode current collector layer stacked in this order.

In addition, in an exemplary embodiment of the present specification, the surface layer may cover at least a portion of a surface of the negative electrode active material layer on a side opposite to the negative electrode current collector layer, and specifically, may cover the entire surface.

In an exemplary embodiment of the present specification, the surface layer can serve as a barrier to prevent lithium ions released from the negative electrode active material from undergoing an oxidation reaction by chemically reacting with oxygen present on the negative electrode surface and absorbing the oxygen. This can prevent or delay the initial thermal runaway reaction of the negative electrode and the lithium secondary battery including the same.

In an exemplary embodiment of the present specification, the inner layer is provided between the negative electrode active material layer and the surface layer, and may be provided in contact with the surface layer, or may be provided at a certain distance from the surface layer.

Specifically, when the inner layer according to an exemplary embodiment of the present specification is provided at a certain distance from the surface layer, the inner layer may be provided between the negative electrode active material layer adjacent to the negative electrode current collector layer and the negative electrode active material layer adjacent to the surface layer.

As an example, when the inner layer is provided in contact with the surface layer, the negative electrode for a lithium secondary battery according to an exemplary embodiment of the present specification may include the surface layer, the inner layer, the negative electrode active material layer, and the negative electrode current collector layer stacked in this order.

As an example, when the inner layer is provided at a certain distance from the surface layer, the negative electrode active material layer may be provided between the inner layer and the surface layer. Specifically, the negative electrode for a lithium secondary battery according to an exemplary embodiment of the present specification may include the surface layer, the negative electrode active material layer, the inner layer, and the negative electrode current collector layer stacked in this order, and more specifically, the surface layer, the negative electrode active material layer, the inner layer, the negative electrode active material layer, and the negative electrode current collector layer stacked in this order.

In the negative electrode for a lithium secondary battery according to an exemplary embodiment of the present specification, the negative electrode active material layer may include two or more negative electrode active material layers, and the inner layer may be provided between at least one pair of adjacent negative electrode active material layers.

Specifically, the negative electrode active material layer may include two or more separated negative electrode active material layers, and the inner layer may be provided between at least one pair of adjacent negative electrode active material layers. In this case, the two or more negative electrode active material layers may be all the same negative electrode active material layers, and the inner layer and the two or more negative electrode active material layers may be arranged to overlap in a thickness direction.

In the negative electrode for a lithium secondary battery according to an exemplary embodiment of the present specification, one surface of one layer of the two or more negative electrode active material layers may be in contact with the inner layer, and the other surface may be in contact with the inner layer or the surface layer.

In the negative electrode for a lithium secondary battery according to another exemplary embodiment of the present specification, the inner layer may be provided as n layers, the negative electrode active material layer may be provided as n+1 layers, and the inner layer and the negative electrode active material layer may be alternately stacked, wherein n may be an integer of 1 or more, and specifically, may be an integer of 2 to 5. In this case, all of the negative electrode active material layers provided as n+1 layers are the same negative electrode active material layers.

When the inner layer is provided between the negative electrode active material layers as described above, it can serve as a barrier that enables the negative electrode active material layers to react stepwise rather than at once during thermal runaway, thereby providing an effect of delaying thermal runaway.

In an exemplary embodiment of the present specification, the inner layer may be provided as 1 to 5 layers, and specifically, may be provided as 2 to 5 layers. According to a method for manufacturing a negative electrode for a lithium secondary battery described below, the inner layer may be provided as 1 to 5 layers between the negative electrode active material layer and the surface layer, and in this case, the thermal stability of the negative electrode can be optimized.

In an exemplary embodiment of the present specification, the inner layer can serve to prevent thermal runaway from reaching the inside of the negative electrode when the temperature continues to rise due to thermal runaway that occurs despite the surface layer.

In an exemplary embodiment of the present specification, the surface layer and the inner layer include one or more selected from the group consisting of a polyvinyl-based polymer, a polyamide-based polymer, a polysilane-based polymer, a polyfluorene-based polymer, a polyaniline-based polymer, and a combination thereof, and the inner layer and the surface layer include polymers different from each other.

Specifically, in an exemplary embodiment of the present specification, the surface layer may include one or more selected from the group consisting of a polyvinyl-based polymer, a polyamide-based polymer, a polyaniline-based polymers, and a combination thereof.

Specifically, in an exemplary embodiment of the present specification, the surface layer may include one or more selected from the group consisting of polyvinyl alcohol, polyvinyl chloride, polyvinyl acetate, polyvinyl pyrrolidone, polyamide 6, polyamide 6,6, polyamide 12, polyamide 46, polyaniline, and a combination thereof.

In an exemplary embodiment of the present specification, the polymer included in the surface layer may be a material capable of absorbing oxygen through a chemical reaction with oxygen.

Specifically, in an exemplary embodiment of the present specification, a weight change (%) of the polymer included in the surface layer, when heated to 600°C according to thermogravimetric analysis (TGA), may be 0.01% or more and 20% or less, specifically, 0.05% or more and 15% or less, and more specifically, 0.1% or more and 10% or less.

The weight change (%) of the polymer included in the surface layer according to the thermogravimetric analysis is an amount of weight increase caused by a chemical reaction of the polymer with oxygen. When the above range is satisfied, the polymer can serve as a material that readily absorbs oxygen to suppress direct contact between the negative electrode active material and lithium ions and oxygen, thereby preventing or delaying an initial thermal runaway reaction of the negative electrode and of the lithium secondary battery including the negative electrode.

In an exemplary embodiment of the present specification, the inner layer may include one or more selected from the group consisting of a polysilane-based polymer, a polyfluorene-based polymer, and a combination thereof.

Specifically, in an exemplary embodiment of the present specification, the inner layer may include one or more selected from the group consisting of polyV4D4 (poly-2,4,6,8-tetramethyl-2,4,6,8-tetravinylcyclotetrasiloxane), polyvinylidene fluoride, and a combination thereof.

In an exemplary embodiment of the present specification, the polymer included in the inner layer may be a material having low oxygen permeability and high heat resistance.

Specifically, in an exemplary embodiment of the present specification, the oxygen permeability of the polymer included in the inner layer may be 10 cc/(m²·day·atm) or more and 2000 cc/(m²·day·atm) or less, specifically 20 cc/(m²·day·atm) or more and 1500 cc/(m²·day·atm) or less, and more specifically 50 cc/(m²·day·atm) or more and 1000 cc/(m²·day·atm) or less.

In an exemplary embodiment of the present specification, the temperature at which the viscosity of the polymer included in the inner layer changes rapidly in thermomechanical analysis (TMA) may be 50°C or higher and 1000°C or lower, specifically 60°C or higher and 800°C or lower, and more specifically 100°C or higher and 500°C or lower.

When the oxygen permeability or heat resistance of the polymer included in the inner layer falls within the above range, thermal runaway can be suppressed from reaching the inside of the negative electrode even if the thermal runaway continues to progress and thus the temperature of the negative electrode continues to rise.

In an exemplary embodiment of the present specification, a total thickness of the surface layer and the inner layer may be 2 µm or less.

In an exemplary embodiment of the present specification, the total thickness of the surface layer and the inner layer may be 2 nm or more and 2 µm or less, specifically 10 nm or more and 1.5 µm or less, and more specifically 25 nm or more and 1 µm or less.

When the total thickness of the surface layer and the one or more inner layers falls within the above range, the thickness is not excessively large, so the resistance increase rate does not become high, and active diffusion of lithium ions can be maintained, thereby securing excellent rate characteristics of the lithium secondary battery.

In an exemplary embodiment of the present specification, the thicknesses of the surface layer and the inner layer may each be 1 nm or more and 400 nm or less.

In an exemplary embodiment of the present specification, the thicknesses of the surface layer and the inner layer may each be 1 nm or more and 400 nm or less, specifically, 2 nm or more and 300 nm or less, and more specifically, 5 nm or more and 200 nm or less.

When the thicknesses of the surface layer and the inner layer each fall within the above range, the thermal stability of the negative electrode can be optimized, while excellent rate characteristics of the lithium secondary battery can also be secured.

In this case, the thicknesses of the surface layer and the inner layer may be measured through scanning electron microscope (SEM) analysis on a cross section of the negative electrode before manufacturing a lithium secondary battery.

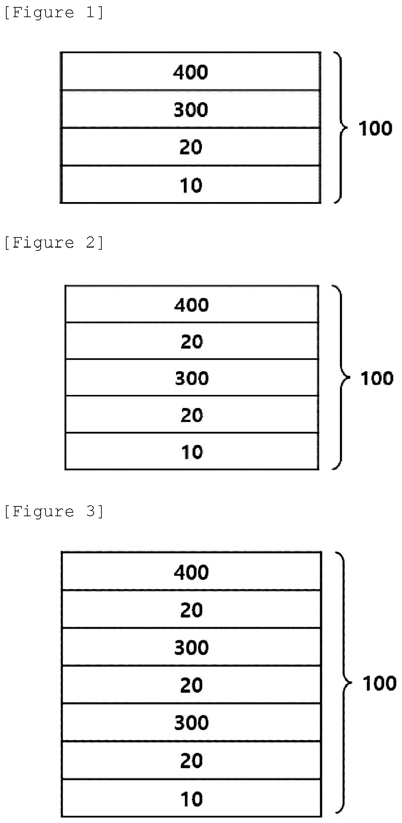

FIGS. 1 to 3 are diagrams illustrating a stacked structure of a negative electrode 100 for a lithium secondary battery according to an exemplary embodiment of the present invention. Specifically, a negative electrode 100 for a lithium secondary battery can be seen which has a stacked structure including a negative electrode active material layer 20 provided on one surface of a negative electrode current collector layer 10, a surface layer 400 provided on a surface of the negative electrode active material layer 20, and an inner layer 300 provided between the negative electrode active material layer 20 and the surface layer 400.

Specifically, FIG. 1 illustrates a stacked structure of the negative electrode 100 for a lithium secondary battery in which the inner layer 300 and the surface layer 400 are provided in contact with each other, but a negative electrode active material layer 20 may be further provided between the inner layer 300 and the surface layer 400. A stacked structure of a negative electrode 100 for a lithium secondary battery in which a negative electrode active material layer 20 is further provided between the inner layer 300 and the surface layer 400 is shown in FIG. 2.

In this case, FIGS. 1 and 2 illustrate that the inner layer 300 is provided as a single layer, but the inner layer 300 may be additionally provided as two to five layers. An example in which the inner layer 300 is provided as three layers is illustrated in FIG. 3, but there is no limitation thereto.

In addition, the thickness of the negative electrode active material layer 20 positioned between the negative electrode current collector layer 10 and the inner layer 300 and the thickness of the negative electrode active material layer 20 positioned between the inner layer 300 and the surface layer 400 may be the same or different, and there is no limitation thereto.

Additionally, the thicknesses of the inner layer 300 and the surface layer 400 may be the same or different, and there is no limitation thereto.

In an exemplary embodiment of the present specification, the surface layer and the inner layer may be deposited on one surface of the negative electrode active material layer. Specifically, the surface layer and the inner layer may be deposited on one surface of the negative electrode active material layer by a deposition method selected from among physical vapor deposition (PVD), chemical vapor deposition (CVD), and atomic layer deposition (ALD), and more specifically, may be deposited by PVD or CVD. However, there is no limitation thereto, and various deposition methods used in the art may be used.

Specifically, a method for manufacturing the negative electrode for a lithium secondary battery according to an exemplary embodiment of the present specification is as follows.

A method for manufacturing a negative electrode for a lithium secondary battery according to an exemplary embodiment of the present specification may include the steps of (S1) forming a first negative electrode active material layer by coating a negative electrode active material layer composition on at least one surface of a negative electrode current collector layer; (S2) forming an inner layer on the first negative electrode active material layer; (S3) forming a second negative electrode active material layer by coating the negative electrode active material layer composition on the inner layer; and (S4) forming a surface layer on the second negative electrode active material layer, and steps S2 and S3 may be repeated from one to five times.

In the method for manufacturing a negative electrode for a lithium secondary battery according to an exemplary embodiment of the present specification, steps S1 to S4 may be performed by a roll-to-roll process. In this case, the "roll-to-roll process" refers to a method in which a thin material such as a film or a copper foil is wound onto a rotating roll and a specific material is applied thereto to impart new functions. The present invention is characterized in that, during the roll-to-roll coating of a negative electrode active material layer onto at least one surface of the negative electrode current collector layer, a step of depositing an inner layer or a surface layer through a roll-to-roll process is introduced to improve processability.

That is, in an exemplary embodiment of the present specification, steps S2 and S4 may be performed by a deposition method using a roll-to-roll process. With respect to the above deposition method, the above-described contents regarding the method for depositing the surface layer and the inner layer may be applied in the same way.

In an exemplary embodiment of the present specification, the method for manufacturing the negative electrode for a lithium secondary battery includes the step (S1) of forming a first negative electrode active material layer by coating a negative electrode active material layer composition on at least one surface of a negative electrode current collector layer, and specifically, the step S1 may include the steps of (S1-1) forming a negative electrode active material layer composition by mixing a negative electrode active material, a negative electrode conductive material, and a negative electrode binder; (S1-2) applying the negative electrode active material layer composition to at least one surface of the negative electrode current collector layer; and (S1-3) drying the negative electrode current collector layer having the negative electrode active material layer composition applied to at least one surface thereof, and steps S1-1 to S1-3 may be performed by a roll-to-roll process.

In an exemplary embodiment of the present specification, the method for manufacturing a negative electrode for a lithium secondary battery includes the step (S2) of forming an inner layer on the first negative electrode active material layer, and specifically, step S2 may be a step of depositing the inner layer on the first negative electrode active material layer by a roll-to-roll process, and more specifically, step S2 may be a step of depositing the inner layer on the first negative electrode active material layer by a CVD method during a roll-to-roll process.

As an example, when step S2 is deposition by a CVD method, the inner layer is formed by being deposited between the negative electrode active material layers during the roll-to-roll process, so that it can be uniformly deposited on a surface having irregularities to provide good step coverage. However, any known deposition method may be used without limitation.

In an exemplary embodiment of the present specification, the method for manufacturing a negative electrode for a lithium secondary battery includes a step (S3) of forming a second negative electrode active material layer by coating the negative electrode active material layer composition on the inner layer, and specifically, may include a step (S3) of forming a second negative electrode active material layer by roll-to-roll coating the negative electrode active material layer composition on the inner layer.

In this case, the negative electrode active material layer composition in step S3 is the same as the negative electrode active material layer composition in step S1, and the first negative electrode active material layer is the same as the second negative electrode active material layer. That is, step S3 is a step of forming a negative electrode active material layer identical to the negative electrode active material layer in step S1, and steps S1-1 to S1-3 may be applied in the same manner, but the negative electrode active material layer composition in step S1-2 may be applied to the inner layer (step S1-2').

In an exemplary embodiment of the present specification, the method for manufacturing a negative electrode for a lithium secondary battery includes the step (S4) of forming a surface layer on the second negative electrode active material layer, and specifically, step S4 may be a step of depositing the surface layer on the second negative electrode active material layer by a roll-to-roll process, and more specifically, step S4 may be a step of depositing the surface layer on the second negative electrode active material layer by a PVD method during a roll-to-roll process.

As an example, when step S4 is deposition by a PVD method, it is suitable as a method of forming the surface layer on the outermost surface of the negative electrode because contamination is less than in deposition by a CVD method, but any known deposition method may be used without limitation, and the deposition method used in step S4 may be the same as or different from the deposition method in step S2.

In the method for manufacturing a negative electrode for a lithium secondary battery according to an exemplary embodiment of the present specification, steps S2 to S3 may be repeated from one to five times.

As an example, when steps S2 to S3 are performed once, the manufactured negative electrode for a lithium secondary battery may have a structure in which the negative electrode current collector layer 10/first negative electrode active material layer 20/inner layer 300/second negative electrode active material layer 20/surface layer 400 are stacked in this order.

As an example, when steps S2 to S3 are performed two times, the manufactured negative electrode for a lithium secondary battery may have a structure in which the negative electrode current collector layer 10/first negative electrode active material layer 20/inner layer 300/second negative electrode active material layer 20/inner layer 300/second negative electrode active material layer 20/surface layer 400 are stacked in this order.

As an example, when steps S2 to S3 are performed five times, the negative electrode for a lithium secondary battery may have a structure in which the inner layer 300 is formed as five layers within the region of the negative electrode active material layers 20.

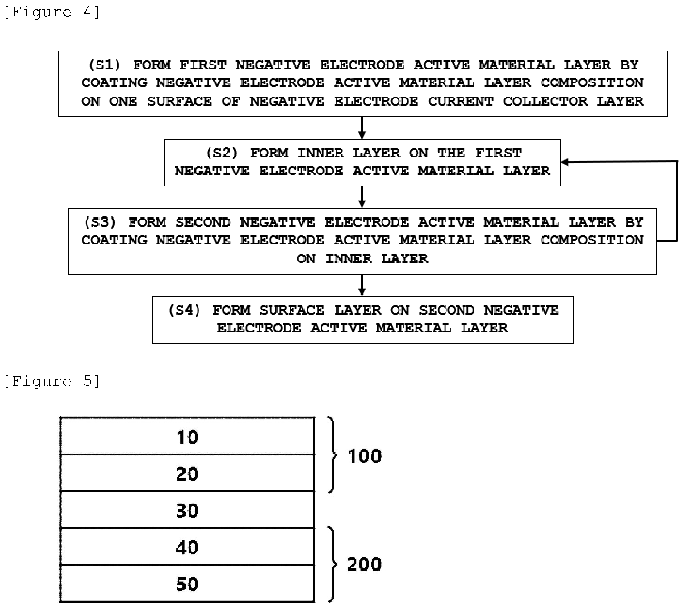

FIG. 4 is a flowchart showing a method for manufacturing a negative electrode for a lithium secondary battery according to an exemplary embodiment of the present specification. Specifically, FIG. 4 shows a method for manufacturing an negative electrode for a lithium secondary battery, including the steps of (S1) forming a first negative electrode active material layer by coating a negative electrode active material layer composition on one surface of a negative electrode current collector layer; (S2) forming an inner layer on the first negative electrode active material layer; (S3) forming a second negative electrode active material layer by coating the negative electrode active material layer composition on the inner layer; and (S4) forming a surface layer on the second negative electrode active material layer, and steps S2 and S3 may be repeated one or more times.

A negative electrode for a lithium secondary battery according to an exemplary embodiment of the present specification may include a negative electrode active material layer provided on at least one surface of a negative electrode current collector layer, and the negative electrode active material layer may include a negative electrode active material layer composition including a negative electrode active material; a negative electrode conductive material; and a negative electrode binder.

In an exemplary embodiment of the present specification, the negative electrode active material layer composition may include one or more selected from the group consisting of a negative electrode active material described below, a negative electrode conductive material, and a negative electrode binder. Specifically, when the negative electrode active material layer composition includes a negative electrode active material, the negative electrode active material may include a carbon-based active material or a silicon-based active material.

In other words, the negative electrode for a lithium secondary battery according to an exemplary embodiment of the present specification may include a carbon-based active material or a silicon-based active material as the negative electrode active material.

The negative electrode for a lithium secondary battery according to an exemplary embodiment of the present specification may include a carbon-based active material or a silicon-based active material as the negative electrode active material, and the silicon-based active material may include one or more selected from the group consisting of Si, a silicon oxide, Si/C, and a Si alloy.

Specifically, in an exemplary embodiment of the present specification, the silicon-based active material may include one or more selected from the group consisting of Si and a silicon oxide, and more specifically, the silicon-based active material may include Si.

In an exemplary embodiment of the present specification, the carbon-based active material may include one or more selected from the group consisting of graphite such as natural graphite or artificial graphite, carbon fiber, non-graphitizable carbon, carbon black, carbon nanotubes, fullerene, and activated carbon, and specifically, may include one or more selected from the group consisting of natural graphite and artificial graphite.

When the carbon-based active material is used as a negative electrode active material according to an exemplary embodiment of the present specification, reversible intercalation and deintercalation of lithium ions are possible, and structural and electrical properties can be maintained. Among these, graphite-based active materials can ensure the life characteristics of lithium secondary batteries due to their excellent reversibility. Since the graphite-based active material has a low discharge voltage of -0.2 V with respect to lithium, a battery using the graphite-based active material can exhibit a high discharge voltage of 3.6 V, and thus can provide many advantages in terms of energy density of a lithium secondary battery.

In an exemplary embodiment of the present specification, when artificial graphite is used as the carbon-based active material, the orientation degree is relatively low during electrode press-rolling, enabling favorable lithium ion intercalation/deintercalation characteristics. Therefore, the rapid charging performance of the battery is excellent, and the degree of expansion due to charging and discharging is low, enabling excellent lifetime characteristics.

The natural graphite may be generally in the form of plate-like agglomerates before being processed, and the plate-like particles may be manufactured in the form of a sphere having a smooth surface through post-treatment processing such as particle pulverization and re-assembly process for use as an active material for manufacture of an electrode.

In an exemplary embodiment of the present specification, when natural graphite is used as the carbon-based active material, the output and capacity of the lithium secondary battery are improved, and the excellent adhesion allows a reduced amount of binder used or the like, thereby enabling the realization of a high-capacity, high-density negative electrode.

In an exemplary embodiment of the present specification, the negative electrode for a lithium secondary battery may include a carbon-based active material and a silicon-based active material as the negative electrode active material, the carbon-based active material may include one or more selected from the group consisting of natural graphite and artificial graphite, and the silicon-based active material may include Si.

In an exemplary embodiment of the present specification, the negative electrode active material may include the carbon-based active material and the silicon-based active material in a weight ratio of 95:5 to 40:60, specifically 90:10 to 50:50, and more specifically ratio of 85:15 to 60:40.

In an exemplary embodiment of the present specification, the negative electrode active material may be included in an amount of 60 parts by weight or more and 99 parts by weight or less, specifically, 70 parts by weight or more and 98 parts by weight or less, and more specifically, 80 parts by weight or more and 96 parts by weight or less, based on 100 parts by weight of the negative electrode active material layer composition.

In an exemplary embodiment of the present specification, the negative electrode conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; a conductive fiber such as a carbon fiber or a metal fiber; a conductive tube such as a carbon nanotube; metal powder such as fluorocarbon, aluminum, and nickel powders; a conductive whisker such as zinc oxide and potassium titanate; a conductive metal oxide such as titanium oxide; or a conductive material such as a polyphenylene derivative may be used, and an additional dispersant may be further included.

In an exemplary embodiment of the present invention, the content of the negative electrode conductive material in the negative electrode active material layer may be 0.01 to 30 parts by weight, specifically 0.03 to 25 parts by weight, and more specifically 0.1 to 20 parts by weight, relative to 100 parts by weight of the negative electrode active material layer composition.

In an exemplary embodiment of the present specification, the negative electrode binder may serve to improve adhesion between negative electrode active material particles and adhesive strength between the negative electrode active material particles and the negative electrode current collector. The negative electrode binder may be one known in the art, and non-limiting examples thereof include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, polyhydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber (SBR), fluoro rubber, polyacrylic acid, and materials in which hydrogen of these is substituted with Li, Na, Ca, or the like, and may also include various copolymers thereof.

In particular, the negative electrode binder according to an exemplary embodiment of the present specification serves to support the negative electrode active material and the negative electrode conductive material in order to prevent distortion and structural deformation of the negative electrode structure during the volume expansion and relaxation of the silicon-based active material. All general negative electrode binders satisfying the above-described role can be applied, specifically, an aqueous binder can be used, and more specifically, SBR and CMC may be used.

In an exemplary embodiment of the present invention, the content of the negative electrode binder in the negative electrode active material layer may be 0.5 to 30 parts by weight, specifically 1 to 25 parts by weight, and more specifically 2 to 25 parts by weight, relative to 100 parts by weight of the negative electrode active material layer composition.

In an exemplary embodiment of the present specification, the negative electrode current collector layer may generally have a thickness of 1 µm to 100 µm. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

Another exemplary embodiment of the present specification provides a lithium secondary battery including: a positive electrode for a lithium secondary battery; the above-described negative electrode for a lithium secondary battery; a separator; and an electrolyte solution.

FIG. 5 is a view showing a stacked structure of a lithium secondary battery according to an exemplary embodiment of the present specification. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and it is shown that the negative electrode 100 for a lithium secondary battery and the positive electrode 200 for a lithium secondary battery are formed in a structure in which they are stacked with a separator 30 interposed therebetween. In this case, a surface layer (not shown) and an inner layer (not shown) included in the negative electrode 100 for a lithium secondary battery are omitted from the illustration.

In an exemplary embodiment of the present specification, the positive electrode may include, as the positive electrode active material, a lithium composite transition metal compound including nickel (Ni) and cobalt (Co), and further including one or more elements selected from the group consisting of Na, K, Mg, Ca, Sr, Ni, Co, Ti, Al, Si, Sn, Mn, Cr, Fe, V, and Zr.

In an exemplary embodiment of the present specification, the positive electrode may include a lithium composite transition metal compound including nickel (Ni), cobalt (Co), and manganese (Mn), as the positive electrode active material.

In an exemplary embodiment of the present specification, the positive electrode active material may be included in an amount of 60 parts by weight or more and 99 parts by weight or less, specifically, 70 parts by weight or more and 98 parts by weight or less, and more specifically, 80 parts by weight or more and 97 parts by weight or less, based on 100 parts by weight of the positive electrode active material layer composition.

In an exemplary embodiment of the present specification, the positive electrode slurry may include a positive electrode conductive material and a positive electrode binder, and may further include a thickener and a slurry solvent.

In an exemplary embodiment of the present specification, additional components such as the positive electrode current collector layer, positive electrode conductive material, positive electrode binder, thickener, and slurry solvent, and the method for manufacturing the positive electrode may be used without limitation as long as they are known in the art within the scope to which the above-described description applies.

In an exemplary embodiment of the present specification, the separator serves to separate the negative electrode and the positive electrode and to provide a transport path for lithium ions, in which any separator may be used as the separator without particular limitation as long as it is typically used in a secondary battery, and particularly, a separator having high moisture-retention ability for an electrolyte solution as well as a low resistance to the ion transport of electrolyte solution ions is preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

An exemplary embodiment of the present specification may provide a battery module or a battery pack including the above-described lithium secondary battery.

Another exemplary embodiment of the present specification may provide a battery pack including the above-described battery module.

According to another exemplary embodiment of the present specification, a battery module including the lithium secondary battery as a unit cell, a battery pack including the same, and a battery pack including the lithium secondary battery may be provided. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Preparation Example>

### Example 1

### Preparation of Negative Electrode

A negative electrode slurry was prepared, which included 130 g (95.27 parts by weight) of graphite and Si at a ratio of 85:15 as a negative electrode active material and 3.5 g (2.57 parts by weight) of SBR (styrene-butadiene rubber) and 1.5 g (1.1 parts by weight) of CMC (carboxymethyl cellulose) as a binder, and further included 0.09 g (0.07 parts by weight) of a dispersant, and 1.3 g (0.95 parts by weight) of Super-C and 0.06 g (0.04 parts by weight) of single-walled CNT as a conductive material.

The negative electrode slurry was roll-to-roll coated on a copper foil (thickness 15 µm) to have a capacity per unit area of 2 mAh/cm² and then dried to form a first negative electrode active material layer (step S1).

PolyV4D4 (poly-2,4,6,8-Tetramethyl-2,4,6,8-tetravinylcyclotetrasiloxane) was roll-to-roll deposited on the first negative electrode active material layer by a CVD deposition method to form an inner layer having a thickness of 50 nm (step S2).

The above-described negative electrode slurry was roll-to-roll coated on the inner layer to have a capacity per unit area of 2 mAh/cm² and then dried to form a second negative electrode active material layer (step S3). Then, polyaniline was roll-to-roll deposited on the surface of the second negative electrode active material layer by a PVD deposition method to form a surface layer having a thickness of 100 nm (step S4), resulting in preparation of a negative electrode for a lithium secondary battery (see the stacked structure of FIG. 2).

### Preparation of Lithium Secondary Battery

A positive electrode slurry including 97 g (97 parts by weight) of NCM-based positive electrode active material, 1.5 g (1.5 parts by weight) of PVDF as a binder, and 1.5 g (1.5 parts by weight) of Super C65 as a conductive material was prepared.

The positive electrode slurry was coated on an aluminum foil (thickness: 12 µm) such that a thickness in a dried state became 65 µm, and then dried, resulting in preparation of a positive electrode for a lithium secondary battery having a capacity per unit area of 3.7 mAh/cm².

A polyethylene separator was interposed between the positive electrode for a lithium secondary battery and the negative electrode for a lithium secondary battery prepared above, and an electrolyte solution was injected, resulting in preparation of a lithium secondary battery (full-cell) of Example 1.

The electrolyte solution was prepared by adding 10 wt% of FEC (fluoroethylene carbonate), based on 100 wt% of the total electrolyte solution, to an organic solvent of EC (ethylene carbonate)/EMC (ethyl methyl carbonate)/DEC (diethyl carbonate) (= 20/70/10 (vol%)), and adding LiPF₆ as a lithium salt at a concentration of 1.0 M.

### Example 2

The negative electrode slurry of Example 1 was roll-to-roll coated on a copper foil (thickness 15 µm) to have a capacity per unit area of 2 mAh/cm² and then dried to form a first negative electrode active material layer (step S1).

PolyV4D4 (poly-2,4,6,8-Tetramethyl-2,4,6,8-tetravinylcyclotetrasiloxane) was roll-to-roll deposited on the first negative electrode active material layer by a CVD deposition method to form an inner layer having a thickness of 50 nm (step S2). Then, the above-described negative electrode slurry was roll-to-roll coated on the inner layer to have a capacity per unit area of 1 mAh/cm² and then dried to form a second negative electrode active material layer (step S3).

After repeating steps S2 and S3 once each under the same conditions as above on the inner layer, polyaniline was roll-to-roll deposited on the surface using a PVD deposition method to form a surface layer having a thickness of 100 nm (step S4), resulting in preparation of a negative electrode for a lithium secondary battery (see the stacked structure of FIG. 3) and a lithium secondary battery (full-cell) of Example 2 including the same.

### Comparative Example 1

An electrode for a lithium secondary battery of Comparative Example 1 was prepared using the same method as in Example 1, except that step S2 of the preparation method of Example 1 was not performed (no inner layer was formed).

### Comparative Example 2

An electrode for a lithium secondary battery of Comparative Example 1 was prepared using the same method as in Example 1, except that step S4 of the preparation method of Example 1 was not performed (no surface layer was formed).

### Comparative Example 3

An electrode for a lithium secondary battery of Comparative Example 3 was prepared using the same method as in Example 1, except that the same polymer, polyaniline, was used in steps S2 and S4 of the preparation method of Example 1.

### Experimental Example 1: Evaluation of Thermal Runaway Duration and Maximum Temperature

The thermal runaway duration and maximum temperature of the lithium secondary batteries of Examples 1, 2 and Comparative Examples 1 to 3 were evaluated and are shown in Table 1 below. Specifically, after each lithium secondary battery was activated and charged to an SOC 100 state, the battery was heated at a rate of 20°C/min using a heat pad, and the duration from the point at which ignition of the secondary battery occurred as the temperature increased to the point at which the ignition continued and was then naturally extinguished was defined as the thermal runaway duration, and the maximum temperature of the lithium secondary battery observed during this process was measured by attaching a thermocouple to the battery surface.

**[Table 1]**

| | Inner layer type | Surface layer type | Total number of polymer thin film layers | Total thickness of polymer thin film layers (nm) | Thermal runaway duration (seconds) | Maximum temperature (°C) |
|---|---|---|---|---|---|---|
| Example 1 | PolyV4D4 | polyaniline | 2 | 150 | 3.4 | 650 |
| Example 2 | PolyV4D4 | polyaniline | 3 | 200 | 3.0 | 620 |
| Comparative Example 1 | - | polyaniline | 1 | 100 | 8.4 | 920 |
| Comparative Example 2 | PolyV4D4 | - | 1 | 50 | 6.6 | 850 |
| Comparative Example 3 | polyaniline | polyaniline | 2 | 150 | 6.0 | 800 |

Referring to Table 1, it can be seen that in the lithium secondary battery of Comparative Example 1, which included only the surface layer without the inner layer, the initial thermal runaway reaction was delayed by the surface layer; however, as heating continued, thermal runaway eventually occurred on the battery surface, and as the thermal runaway progressed, the temperature continuously increased, so that thermal runaway finally occurred even inside the battery, taking 8.4 seconds until it was naturally extinguished, and the maximum temperature of the battery reached 920°C.

It can be seen that, in the lithium secondary battery of Comparative Example 2, which included only the inner layer without the surface layer, thermal runaway occurred from the early stage of heating because the surface layer was absent, and although the inner layer briefly delayed thermal runaway from reaching the inside of the battery, thermal runaway eventually reached the inside, with the thermal runaway duration being 6.6 seconds, and the maximum temperature of the battery reaching 850°C.

In the lithium secondary battery of Comparative Example 3, in which the surface layer and the inner layer were made of the same polymer, the initial thermal runaway reaction was delayed by the surface layer as in Comparative Example 1; however, as heating continued, thermal runaway eventually occurred on the battery surface, and because the inner layer also used a polymer capable of readily absorbing oxygen, an oxidation reaction of lithium occurred even in the inner layer, and thermal runaway could not be suppressed. As a result, it can be seen that the thermal runaway duration was 6.0 seconds and the maximum temperature of the battery reached 800°C.

However, it can be seen that, in the lithium secondary battery of Example 1, in which a surface layer was provided on the surface of the negative electrode active material layer using a polymer capable of readily absorbing oxygen and an inner layer was provided between the negative electrode active material layer and the surface layer using a polymer having low oxygen permeability and high heat resistance, the thermal runaway duration was only 3.4 seconds, and ignition of the battery was naturally extinguished more quickly than in Comparative Examples 1 to 3. Also, the maximum temperature reached during the thermal runaway process was 650°C, which shows that the temperature decreased by as much as 18.75% compared with Comparative Example 3, which had the lowest maximum temperature among the comparative examples, and, as the temperature rose less, the degree of swelling of the battery was also reduced, thereby improving the battery life.

In particular, in the lithium secondary battery of Example 2, which included the inner layer as two layers, the thermal runaway duration was 3.0 seconds, which was the shortest, and the maximum temperature reached during the thermal runaway process was 620°C, which shows that the temperature decreased by as much as 22.5% compared with Comparative Example 3, and, as in the lithium secondary battery of Example 1, as the temperature rose less, the degree of swelling of the battery was the smallest, thereby improving the battery life.

That is, the negative electrode for a lithium secondary battery according to an exemplary embodiment described in the present specification includes the surface layer and the inner layer, which are polymer thin film layers, thereby serving as a barrier against the oxidation reaction between oxygen and lithium ions released from the negative electrode active material, and thus suppressing a thermal runaway reaction due to oxidation heat and suppressing a swelling phenomenon to improve life performance. In particular, by integrating the coating step for providing the negative electrode active material layer and the deposition step for providing the polymer thin film layer into a roll-to-roll process, formation of a protective layer on the surface and inside of the negative electrode during the manufacture of the negative electrode can be facilitated, and thus processability can be ensured.

## Claims

1. A negative electrode for a lithium secondary battery comprising:
a negative electrode active material layer provided on at least one surface of a negative electrode current collector layer;
a surface layer provided on a surface of the negative electrode active material layer; and
an inner layer provided between the negative electrode active material layer and the surface layer,
wherein the surface layer and the inner layer comprise one or more selected from the group consisting of a polyvinyl-based polymer, a polyamide-based polymer, a polysilane-based polymer, a polyfluorene-based polymer, a polyaniline-based polymer, and a combination thereof, and the inner layer and the surface layer comprise polymers different from each other.

2. The negative electrode for a lithium secondary battery of claim 1, wherein the surface layer comprises one or more selected from the group consisting of a polyvinyl-based polymer, a polyamide-based polymer, a polyaniline-based polymer, and a combination thereof.

3. The negative electrode for a lithium secondary battery of claim 1, wherein the inner layer comprises one or more selected from the group consisting of a polysilane-based polymer, a polyfluorene-based polymer, and a combination thereof.

4. The negative electrode for a lithium secondary battery of claim 1, wherein
the negative electrode active material layer comprises two or more negative electrode active material layers, and
the inner layer is provided between at least one pair of adjacent negative electrode active material layers.

5. The negative electrode for a lithium secondary battery of claim 1, wherein
the inner layer is provided as n layers,
the negative electrode active material layer is provided as n+1 layers, and
the inner layer and the negative electrode active material layer are alternately stacked, and n is an integer of 1 or more.

6. The negative electrode for a lithium secondary battery of claim 1, wherein a total thickness of the surface layer and the inner layer is 2 µm or less.

7. The negative electrode for a lithium secondary battery of claim 1, wherein thicknesses of the surface layer and the inner layer are each 1 nm or more and 400 nm or less.

8. The negative electrode for a lithium secondary battery of claim 1, wherein the inner layer is provided as 1 to 5 layers.

9. The negative electrode for a lithium secondary battery of claim 1, wherein the surface layer and the inner layer are deposited on one surface of the negative electrode active material layer.

10. A lithium secondary battery comprising:
a positive electrode for the lithium secondary battery;
the negative electrode for a lithium secondary battery of any one of claims 1 to 9;
a separator; and
an electrolyte solution.

11. A battery module comprising the lithium secondary battery of claim 10.

12. A battery pack comprising the lithium secondary battery of claim 10.

13. A battery pack comprising the battery module of claim 11.

14. A method for manufacturing a negative electrode for a lithium secondary battery, the method comprising:
(S1) forming a first negative electrode active material layer by coating a negative electrode active material layer composition on at least one surface of a negative electrode current collector layer;
(S2) forming an inner layer on the first negative electrode active material layer;
(S3) forming a second negative electrode active material layer by coating the negative electrode active material layer composition on the inner layer; and
(S4) forming a surface layer on the second negative electrode active material layer,
wherein S2 and S3 are repeated from one to five times.

15. The method of claim 14, wherein S1 to S4 are performed by a roll-to-roll process.

16. The method of claim 14, wherein S2 and S4 are performed by a deposition method using a roll-to-roll process.
